# EUROPEAN PATENT APPLICATION

(11) **EP 2 963 836 A1**
(43) Date of publication of application: **06.01.2016**
(21) Application number: 14175633.8
(22) Date of filing: 03.07.2014
(51) Int. Cl.: H04B 1/715, H04B 1/7143

(54) **Spread spectrum methods and devices**

(71) Applicant: ETH Zurich, 8092 Zurich (CH)
(72) Inventor: Lenders, Vincent, 3400 Burgdorf (CH); Giustiniano, Domenico, 28005 Madrid (ES)

(57) **Abstract**

A bandwidth-hopping spread spectrum (BHSS) method and device is described for mitigating the effects of jamming in wireless communication. According to the BHSS method, a signal is spread, for example using a DSSS technique, to form a sequence of hops 10, 20, 30 whose spread bandwidths 12, 22, 32 are modulated in dependence on a pseudo-random function. The BHSS hops may also be frequency modulated such that the channel frequencies f_{c1}, f_{c2}, f_{c3} of successive hops vary according to a pseudo-random sequence. Jamming or interference signals may be substantially filtered out by a receiver having information about the BHSS modulating sequence(s) used for transmission.

## Description

The present invention relates to spread spectrum techniques for improving the signal-to-noise ratio of electromagnetic communications and, in particular, but not exclusively, for mitigating the effects of jamming on wireless communications.

### Background of the invention

Radio jamming, whether deliberate or otherwise, degrades and disrupts radio communications by decreasing the signal-to-noise ratio of the broadcast signal, typically by attempting to drown the broadcast signal or its information content with a powerful and/or similar jamming signal in the same frequency range, thereby disrupting the flow of information. Deliberate jamming techniques may use adaptive algorithms for dynamically changing the power and/or frequency characteristics of the jamming signal in order to optimise the jamming effect on the broadcast signal which is the jamming target.

In wireless communications across public spaces, the effects of jamming cannot be completely eliminated. However, the use of jamming mitigation techniques can mean that significantly more transmission power in the jamming signal is required in order to achieve a given degree of communication disruption.

Spread spectrum techniques have been developed for mitigating the effects of jamming. In direct sequence spread spectrum (DSSS), for example, the signal is spread across the transmitter's operating bandwidth, modulated with a high-frequency pseudo-random noise signal which is then demodulated ("de-spread") by the receiver, which has information about the pseudo-random sequence used for modulation. The generation of pseudo-random sequences is well known in the prior art and will not be described here. DSSS is effective at increasing the signal-noise ratio, and thereby mitigating the effects of noise in the broadcast environment. It is effective at resisting jamming when the spreading codes (the pseudo-random pattern or sequence, for example) are kept secret, since the jammer is obliged to spread the jamming signal power over the entire transmission band, with the result that the jamming signal will be easily removed when despreading occurs at the receiver. On the other hand, when the spreading codes are known to the jammer, the jammer can generate jamming signals which are more difficult or impossible to remove when despreading. DSSS is used for example to improve the signal-noise ratio in WLAN systems, and thereby provide improved protection against unintentional interference. In the case of commercial WLAN, the spread codes are not required to be secret, since the DSSS modulation is designed to mitigate the effects of unintentional interference. However, DSSS is also used in communications such as military communications, which must be protected against jamming (ie intentional interference), in which case the spread codes are kept secret.

In frequency-hopping spread spectrum (FHSS), instead of modulating the broadcast signal with pseudo-random noise, a spread code (eg a pseudo-random sequence) is used to switch frequency channels, so that the transmission "hops" pseudo-randomly from one narrow-bandwidth channel to another. In other words, the central frequency of the baseband is "hopped" such that, overall, a wider frequency domain is used for transmission. FHSS is used for example in Bluetooth™ communications, in which its purpose is to improve resistance against unintentional interference. In such an environment the spread codes are not necessarily secret. In military applications of FSSS, by contrast, the spread codes are kept secret, and FSSS is thus suitable for protecting the communications against intentional interference (jamming). In addition to providing increased security against eavesdropping, FHSS has the advantage that transmission power in each active channel (hop) can be focussed on a narrow bandwidth, thereby increasing the signal-noise ratio and rendering the communication more resistant to interference, intentional or otherwise.

Thus, in DSSS, a low-bit rate signal is spread by a random or pseudo-random, high-bandwidth transmission signal, whereas in FHSS, the transmission hops to different frequencies on the assumption that some frequency bands are not jammed or used by another communication.

Hybrid spread spectrum (HSS) techniques have also been proposed in which DSSS techniques may be combined with FHSS, for example, or with fast frequency hopping (FFH) or time-hopping (TH) modulation techniques. A hybrid spread spectrum approach is described for example in US2002001337, in which a fast frequency-tuning technique is combined with DSSS with the aim of improving scalability of transmission capacity. Transmission bandwidth is also dynamically allocatable, dependent on bandwidth availability, for the same purpose.

In orthogonal frequency division multiplexing (OFDM), the baseband carrier signal is split into into multiple smaller channels (sub-carriers) having different (orthogonal) frequencies and/or bandwidths. If any of the subcarriers suffers from interference, intentional or otherwise, then at least some of the other subchannels should be able to communicate the signal information content successfully..

Although they can improve jamming resistance, prior art anti-jamming techniques are nevertheless still vulnerable to more sophisticated, adaptive jamming attacks, in which the jammer attempts to discover some information about the pseudo-random sequence and/or the channel configuration, and adapts the jamming signal dynamically in response to this information. Using ultra-fast processing techniques, for example, it may be possible for a jammer to detect and track the frequency hops of a signal transmitted using FHSS, and dynamically adapt the jamming signal to follow the sequence of FHSS channels in real time.

### Brief description of the invention

The invention described in this application seeks to overcome the above and other difficulties inherent in the prior art. In particular, the invention aims to provide a signal transmission method and device as set out in the appended claims 1 and 3, a corresponding signal receiving method and device as set out in claims 2 and 4, a corresponding jamming method and device as set out in claims 8 and 9 and an electromagnetic signal as set out in claim 13. Further variants of the methods, devices and signal of the invention are described in dependent claims 5 to 7, 10 to 12 and 14 and 15.

A unifying inventive feature in the various elaborations of the invention lies in the use of the signal bandwidth as the encoded (hopped, de-hopped, or adapted) parameter, so as to implement a spread spectrum technique, referred to in this description as Bandwidth Hopping Spread Spectrum (BHSS) which offers significantly greater signal-noise ratio and jamming resistance than prior art wideband techniques such as DSSS, FHSS, OFDM or the hybrid approaches mentioned above.

The invention and its advantages will be explained in greater detail with reference to the accompanying drawings, in which:
Figure 1 illustrates an example of a series of BHSS hops according to a first embodiment of the invention.
Figure 2 illustrates an example of a series of BHSS hops according to a second embodiment of the invention.
Figures 3a to 3c show in schematic form a jamming scenario affecting a first BHSS hop according to the first or second embodiment of the invention.
Figures 4a to 4c show in schematic form a jamming scenario affecting a second BHSS hop according to the first or second embodiment of the invention.
Figures 5a and 5b show in schematic form a jamming scenario affecting a third BHSS hop according to the first or second embodiment of the invention.
Figure 6 illustrates an example of a transmitter for transmitting a BHSS-modulated signal using a method according to the invention.
Figure 7 illustrates an example of a receiver for receiving a BHSS-modulated signal transmitted using a method according to the invention.

The drawings are intended merely as exemplary illustrations, for the purpose of understanding certain principles underlying the invention, and are not to be construed as limiting the scope of the invention. Where the same reference numerals are used in different drawings, these reference numerals are intended to refer to the same or corresponding features. However, the use of different reference numerals should not necessarily be taken as an indication that the referenced features differ in any particular respect.

### Detailed description of the invention

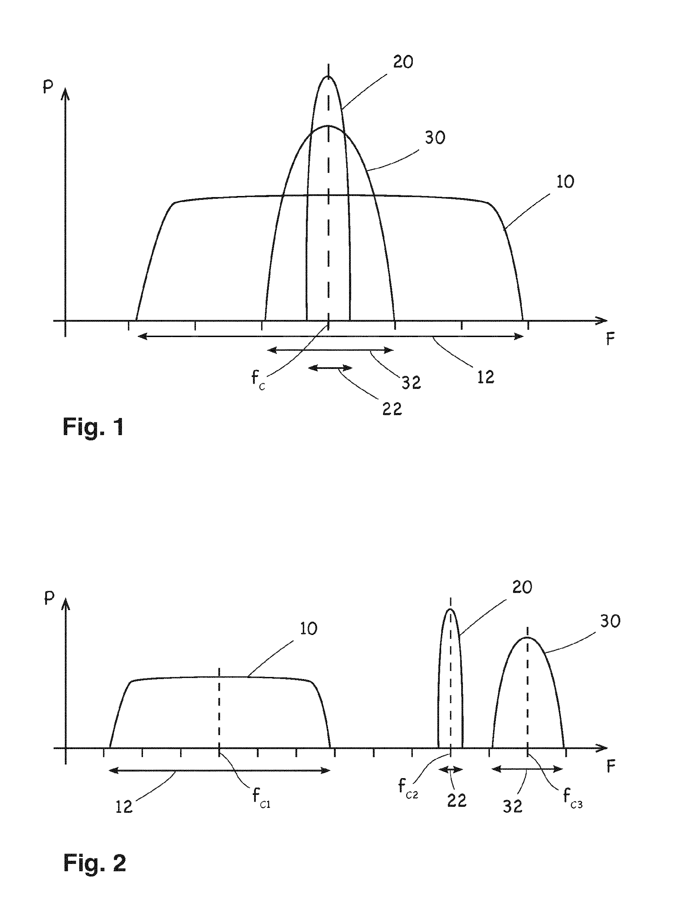

Figures 1 and 2 each illustrate an example of a sequence of encoding "hops" of a transmitted communications signal 10, 20, 30, with the power spectral density P illustrated on the vertical axis and the transmission baseband frequency F on the horizontal axis. Frequency gradation marks are shown on the frequency axis, and are intended to indicate discrete transmission channels (although not necessarily having evenly distributed frequencies as shown in the figures). Figure 1 shows how a baseband signal may be transmitted and received as a succession of hops of different bandwidths, according to a first embodiment of the invention. In the illustrated example, a first hop 10 is shown with a wide bandwidth 12, followed by a second hop 20 having a narrow bandwidth 22 and then a third hop 30 having an intermediate bandwidth 32. In this illustrated example, the hops are transmitted on a single channel having central frequency f_{c}. It should be noted that the illustrations are not intended to give any indication of scale. The ratio of the bandwidths of the narrow hop 20 and the wide hop 10 could for example be many orders of magnitude.

Figure 2 shows similar hops to those illustrated in figure 1, except that, in addition to having different bandwidths, the successive hops 10, 20 and 30 are transmitted on different frequencies (channels f_{c1}, f_{c2}, f_{c3} in this example), according to the second embodiment of the invention.

The bandwidth hopping spread spectrum (BHSS) technique of the invention may be employed on its own, or preferably in conjunction with one or more other wideband spread spectrum techniques, such as DSSS or a frequency hopping (FHSS) technique (as indicated in figure 2), or with other wideband modulation techniques, individually or in combination. An OFDM algorithm may be adapted, for example, to use bandwidth hopping to modulate the composite baseband signal or the individual sub-carriers signals of the OFDM modulated signal. In each case, the (eg pseudo-random) code sequence used for the bandwidth hopping may be the same as the (eg pseudo-random) code sequence(s) used for the one or more other (eg DSSS, FHSS or OFDM) techniques, or the bandwidth hopping may alternatively use a different code sequence from that/those used by the one or more other techniques.

The term "hop" is used in this description to refer to the BHSS spread state of the communication signal during a discrete time interval of the BHSS sequence pattern. Similarly the term "hopping" refers to the process of changing a particular transmission parameter (the bandwidth in the case of the invention) of the communication signal at each time interval, according to a predetermined sequence or pattern. "De-hopping" refers to the reverse process, in which the time-intervals (hops) of the communication signal are de-spread, using the same (eg pseudo-random) sequence as was used for signal transmission, and demodulated to render the original decoded information content of the transmitted signal. The hopping and de-hopping processes thus assume a synchronisation of the pseudo-random sequences used for transmission and reception. The term "bandwidth" of a signal is used in this application to refer to the breadth or spectral extent of the range of frequencies over which the signal is transmitted. A bandwidth is normally understood to comprise a single contiguous range of frequencies, however it may alternatively comprise more than one contiguous range which are not mutually contiguous with each other.

As mentioned above, the spreading of the communication signal 10, 20, 30 may for example be carried out by a known DSSS technique, with the exception that the spreading occurs over a bandwidth 12, 22, 32 whose width is itself varied, for example following a pseudo-random pattern sequence. In this case, the time intervals (hops) may correspond to the chips of a standard DSSS technique. They may also vary in duration, for example in order to permit a constant or more even information flow rate, for example with narrow hops having a longer duration than broad hops.

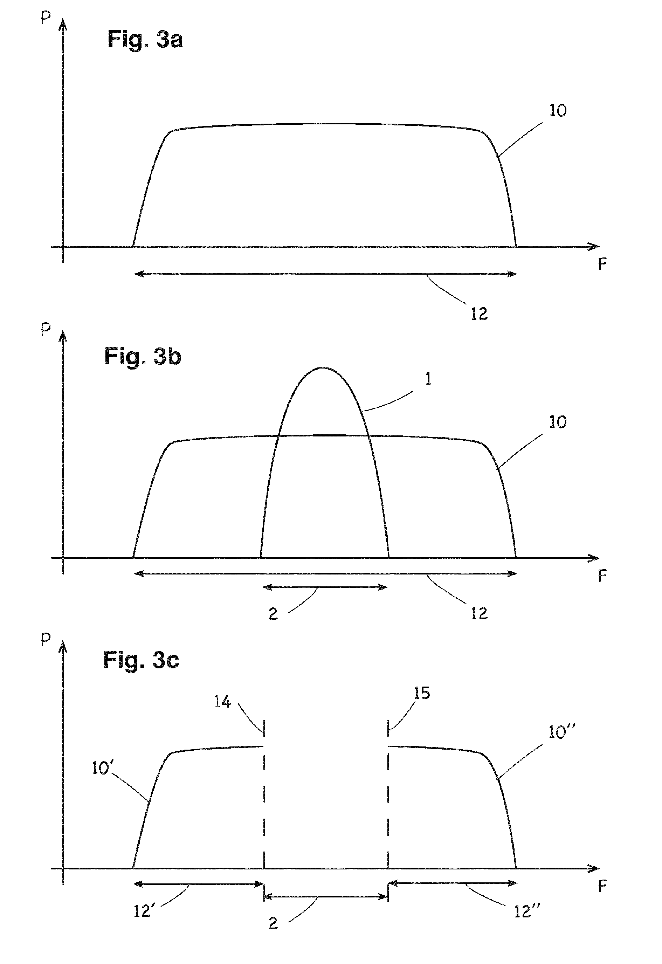

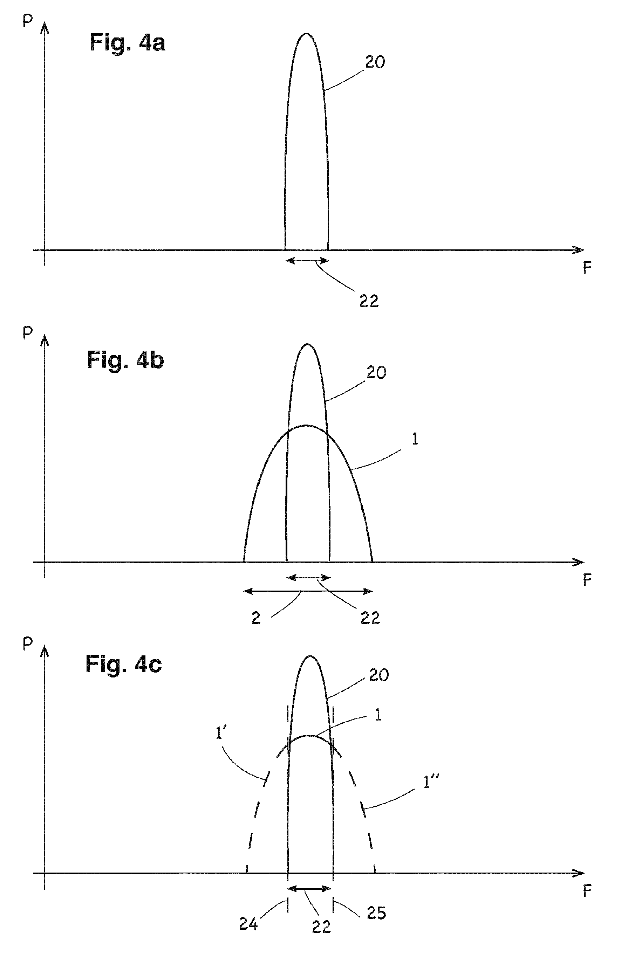

Figures 3 to 5 illustrate how bandwidth hopping the baseband signal can offer protection against jamming. Figures 3a, 4a and 5a show the BHSS hops 10, 20 and 30 of figure 1 or figure 2. Corresponding figures 3b, 4b and 5b show the BHSS hops 10, 20 and 30 in the presence of a jamming signal 1, and figures 3c and 4c show how the jamming signal 1 can be filtered out from the combined signal 10, 1; 20, 1 at a receiving device.

Figures 3a and 3b thus show a first example of a BHSS hop 10, transmitted at a first time, in which the communication signal has been spread over a wide bandwidth 12, wider than the bandwidth 2 of jamming signal 1. Figure 3c shows how the combined overlapping signals 10 and 1, when received by a receiving device, can be treated, for example with an excision or notch filter, to remove a portion of the combined signal 10, 1 over the bandwidth 2 of the jamming signal 1 between lower and upper frequencies 14 and 15. In this case, the remaining signal portions 10', 10" over bandwidth portions 12' and 12" of the bandwidth 12 can then be de-spread, for example using a known DSSS despreading technique, to recover the information content of the originally-transmitted signal.

Figure 4a shows a second example of a BHSS hop, transmitted at a second time, in which the communication signal 20 has been spread in a similar fashion but to a lesser extent than the hop shown in figure 3a. Communication signal 20 thus has a much narrower bandwidth 22 during this second example hop than the bandwidth 2 of the jamming signal 1, and may thus be transmitted with a significantly higher power spectral density over its narrow bandwidth 22. Figure 2c shows how the combined overlapping signals 20 and 1, when received by a receiving device, can be treated, for example with a band-pass filter, to remove portions 1' and 1" of the jamming signal 1 which fall outside the bandwidth 22 of the communication signal 20, that is to say below frequency 24 and above frequency 25. In this case, the remaining bandwidth portion 22, comprising the high-power communication signal 20 and a narrow section of the lower-power jamming signal 21, may then be de-spread, for example using a known DSSS despreading technique, to recover the information content of the originally-transmitted signal.

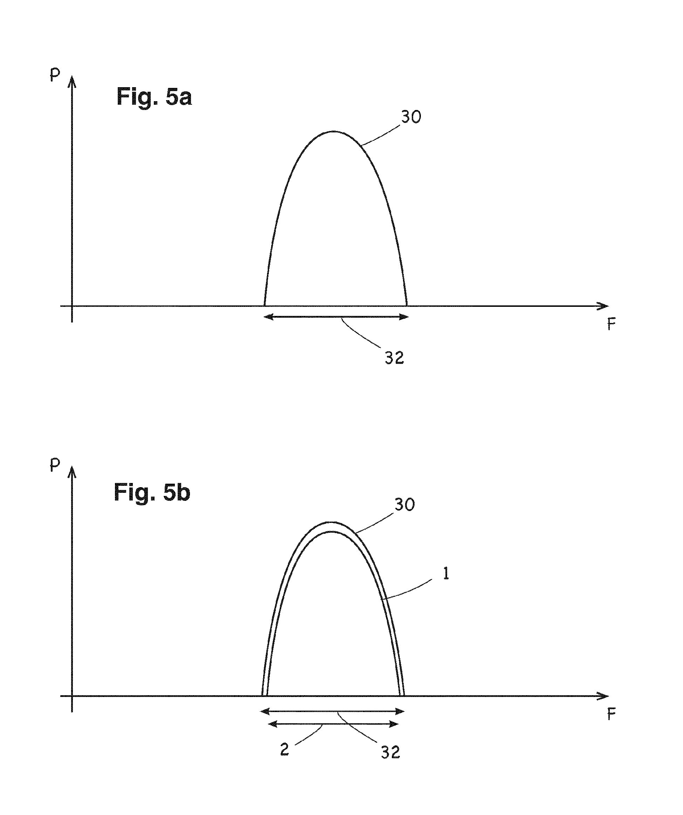

Figures 5a and 5b show a third example of a BHSS hop, transmitted at a third time, in which the communication signal 30 has been spread, for example by DSSS, but such that its spread bandwidth 32 and its power spectral density are similar to the bandwidth 2 and power spectral density of the jamming signal 1. For such a hop, the presence of the jamming signal 1 may successfully prevent the recovery of the information content from the communication signal 30. Figures 5a and 5b thus illustrate a situation which a would-be jammer would attempt to achieve in order to jam a BHSS-spread communication signal successfully. The jamming signal should not only be sufficiently powerful and disruptive, but also have a similar bandwidth to that of the communication signal, at the same time, and for the duration of the particular hop. However, since the bandwidth of the communication signal is changing, eg according to a pseudo-random or other pattern sequence, the likelihood that the jammer will succeed in matching the bandwidth 2 of the jamming signal 1 to the bandwidth 32 of the BHSS-spread communication signal 30 over the duration of one hop can be reduced to near zero. In the unlikely event that the communication signal is successfully jammed for a particular BHSS hop, then the information content of the communication signal which is missing from the de-spread signal as a result can be reconstituted or re-transmitted using known error-correction techniques.

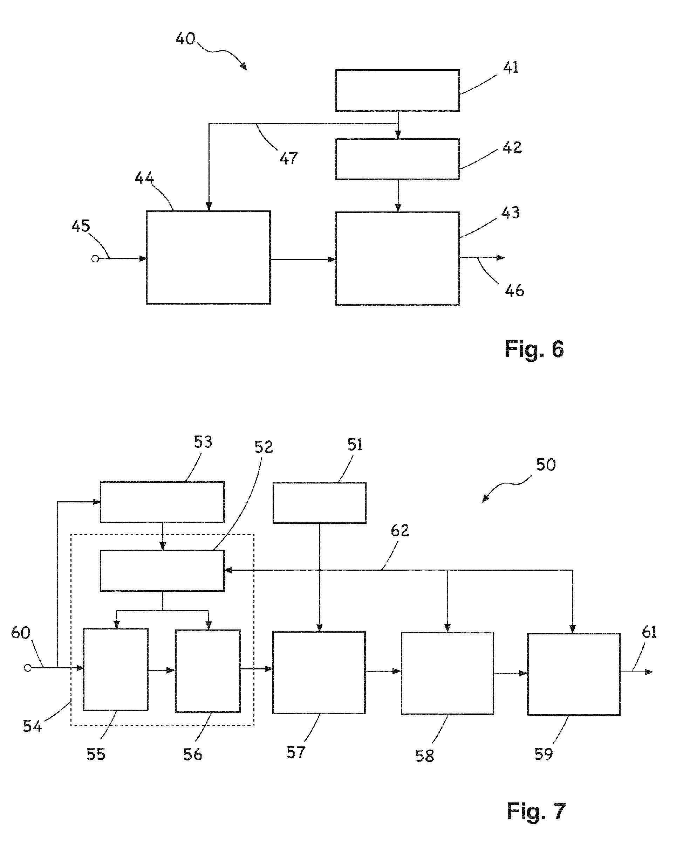

Figure 6 shows an example of a transmitter device 40 for implementing a BHSS spread spectrum modulation method according to the invention. An input signal 45, which may for example be a digital bit stream, may be converted to chips by a symbol to chip converter 44, for example using a known DSSS techniques, with the bandwidth being determined by bandwidth control signal 47. Bandwidth control signal 47 is also used by spread-bandwidth modulation unit 43 to adapt the pulse shape of each pulse (hop) in dependence on the pseudo-random pattern of the pseudo-random generator 41. The bandwidth change may be achieved for example by defining different pulse shapes in pulse-shaping unit 42 and/or by scaling the pulse duration. In this way, the transmitted communication signal 46 is BHSS modulated.

Figure 7 shows a schematic representation of an example of a receiver 50 for receiving a BHSS-hopped signal. Depending on the characteristics of the received signal 60 and jammer bandwidth 2, various filters 54 can be applied to the received signal 60. pseudo-random source 51 is synchronised with the pseudo-random source 41 of the transmitter 40 and provides information (current bandwidth signal 62) about the bandwidth of the received signal 60 at any particular time. Jamming detection unit 53 analyses the received signal 60 in order to detect the presence and parameters of any interference and/or jamming signal component 1 of the received signal 60. Using the information from the jamming detection unit 53, and information about the current bandwidth provided by the pseudo-random source 51, the control logic 52 controls the function of low-pass filter 55 and/or excision filter (also known as a notch filter) 56. The low-pass filter 55 removes out-of-band signal components, whereas the notch filter 56 removes narrow-band interference.

Demodulation may be performed for example by an integrate-and-sample unit or a matched filter 57 and a sampling unit 58, depending on the current bandwidth signal 62 provided by pseudo-random source 51, because the pulse shapes are not constant. The translation back from from the demodulated chips to the output bit-stream information 61 is performed by a decoder unit 59; this process may also be dependent on the current bandwidth signal 62, since the hop interval may also vary.

In order to jam a BHSS encoded signal, a jamming device and method according to the invention may function in a similar fashion to that of the transmitter 40 illustrated in figure 6, with the exception that a symbol-to-chip modulator is not required. Such a jamming device/method may comprise a pseudo-random source synchronised with or emulating the pseudo-random source 41 of the transmitter 40, or it may comprise a device such as an ultra-fast, high resolution spectrum analyser configured to detect the current bandwidth of the transmitted signal 46.

The various embodiments and implementations of the inventions outlined above have been described with reference to wireless communication applications. However, it should be understood that the techniques described here may be applied in other forms of communication such as wired or optical communications.

## Claims

1. Signal transmission method comprising a spread spectrum hopping algorithm for hopping at least one parameter of the transmitted signal (10, 20, 30, 46, 60), **characterised in that** the at least one hopped parameter comprises the bandwidth (12, 22, 32) of the transmitted signal (10, 20, 30).

2. Signal receiving method for receiving a signal (10, 20, 30, 46, 60) transmitted according to the signal transmission method of claim 1, the signal receiving method comprising a spread spectrum algorithm for de-hopping the said at least one hopped parameter of the received signal (10, 20, 30, 46, 60), wherein the at least one hopped parameter comprises the bandwidth (12, 22, 32) of the received signal (10, 20, 30).

3. Signal transmission device (40) comprising means (41, 42, 42, 44) for spread spectrum hopping at least one parameter of the transmitted signal (10, 20, 30, 46), **characterised in that** the at least one hopped parameter comprises a bandwidth (12, 22, 32) of the transmitted signal (10, 20, 30, 46).

4. Signal receiving device (50) for receiving a signal (10, 20, 30, 46, 60) transmitted by a signal transmission method according to claim 1, or by a signal transmission device (40) according to claim 3, the signal receiving device (50) comprising means (53, 54, 55, 56, 57, 58, 59) for de-hopping the at least one hopped parameter of the received signal (10, 20, 30, 46, 60), **characterised in that** the at least one hopped parameter comprises the bandwidth (12, 22, 32) of the received signal (10, 20, 30, 46, 60).

5. Signal receiving device (50) according to claim 4, comprising filter means (54, 55, 56) configured for removing at least a part of the received signal (10, 20, 30, 46, 60) over at least a part of the bandwidth (12, 22, 32) of the received signal (10, 20, 30, 46, 60).

6. Signal receiving device (50) according to claim 5, wherein the filter means (54, 55, 56) comprises a bandpass filter (55) for removing a first component of the received signal below a first frequency (14) and/or a second component of the received signal above a second frequency (15).

7. Signal receiving device according to claim 6, wherein the filter means (54, 55, 56) is configured as an excision filter (56) for removing a third component of the received signal between a first frequency (24) a second frequency (25).

8. Jamming method for jamming a signal (10, 20, 30, 46) transmitted according to the signal transmission method of claim 1, or by a signal transmission device (40) according to claim 3, the jamming method comprising transmitting a jamming signal (1) and adapting a transmission parameter of the jamming signal (1) to the at least one hopped parameter of the transmitted signal (10, 20, 30, 46), **characterised in that** the at least one hopped parameter comprises the bandwidth (12, 22, 32) of the transmitted signal (10, 20, 30, 46), and the at least one adapted transmission parameter comprises the bandwidth (2) of the jamming signal (1).

9. Jamming device for jamming a signal (10, 20, 30, 46) transmitted according to the method of claim 1, or by a signal transmission device (40) according to claim 3, the jamming device comprising means for transmitting a jamming signal (1) and means for adapting at least one transmission parameter of the jamming signal (1) to the at least one hopped parameter of the transmitted signal (10, 20, 30, 46) being jammed, **characterised in that** the at least one hopped parameter comprises the bandwidth (12, 22, 32) of the transmitted signal (10, 20, 30, 46), and the at least one adapted transmission parameter comprises the bandwidth (2) of the jamming signal (1).

10. Method according to one of claims 1, 2 or 8, or device according to one of claims 3, 4, 5, 6, 7 or 9, wherein the hopping or de-hopping or adapting is performed such that the bandwidth varies according to a predetermined pseudo-random sequence.

11. Method according to one of claims 1, 2, 8 or 10, or device according to one of claims 3, 4, 5, 6, 7, 9 or 10, wherein the at least one hopped parameter or the at least one de-hopped parameter or the at least one adapted transmission parameter comprises at least one of a channel frequency (f_{c}, f_{d}, f_{c2}, f_{c3}), a signal amplitude, a spectral power density (P) or a hop duration.

12. Method according to one of claims 1, 2, 8, 10 or 11, or device according to one of claims 3, 4, 5, 6, 7, 9, 10 or 11, wherein the transmitted signal (46) comprises an orthogonal frequency-division multiplexed signal or a sub-carrier signal of an orthogonal frequency-division multiplexed signal.

13. Electromagnetic signal (46) transmitted according to a method according to one of claims 1, 2, 8, 10 or 11, or a device according to one of claims 3, 4, 5, 6, 7, 9, 10 or 11, the electromagnetic signal (46) comprising a succession of spread spectrum hops (10, 20, 30), **characterised in that** the bandwidth (12, 22, 33) of the electromagnetic signal in each spread spectrum hop (10, 20, 30) differs from the bandwidth (12, 22, 33) of the electromagnetic signal in a preceding and/or succeeding spread spectrum hop (10, 20, 30) according to a predetermined bandwidth modulation function.

14. Electromagnetic signal (46) according to claim 13, wherein the bandwidth modulation function comprises a predetermined pseudo-random sequence.

15. Electromagnetic signal (46) according to claim 13 or claim 14,
wherein the electromagnetic signal (46) comprises an orthogonal frequency-division multiplexed signal or a sub-carrier signal of an orthogonal frequency-division multiplexed signal.
